# EUROPEAN PATENT SPECIFICATION

(11) **EP 1 992 749 B1**
(45) Date of publication and mention of the grant of the patent: **01.07.2015**
(21) Application number: 08156131.8
(22) Date of filing: 14.05.2008
(51) Int. Cl.: E03F 5/18

(54) **Waste tank**
Abwassertank
Réservoir de déchets

(30) Priority: 15.05.2007 FI 20075353
(43) Date of publication of application: 19.11.2008
(73) Proprietor: Uponor Infra Oy, 01510 Vantaa (FI)
(72) Inventor: Mouhu, Esa, 15140 Lahti (FI); Tast, Niila, 15270 Kukkila (FI)
(74) Representative: Papula Oy

(56) References cited:
- WO-A1-2004/020348
- CA-A1- 2 324 855
- DE-A1- 2 026 757
- FR-A1- 2 812 628

## Description

### BACKGROUND OF THE INVENTION

The invention relates to a waste tank comprising a waste compartment for waste liquid and, separated from the waste compartment in a liquidproof manner, a technical compartment for technical equipment, at least part of the technical compartment being arranged inside the body of the waste tank.

Wastewaters from detached buildings or small groups of buildings are purified in small purification units. These purification units include a waste tank for waste liquid and technical equipment, such as an air compressor, chemical pump and control technology, for purifying the wastewaters.

A prior art solution used in small purification units is to arrange the technical equipment into a control cabinet separate from the waste tank. The control cabinet may be either a cabinet attached to a support pole and placed on the ground surface or a cabinet provided with a hinged cover and placed underground. A control cabinet placed on the ground surface in particular is unaesthetic. A separate control cabinet may also be a solution increasing the total costs. Further, the piping and wiring needed between the control cabinet and the waster tank causes additional work during the mounting phase and requires extreme care from the mechanic.

FI 117093 discloses a solution in which a waste tank is divided into an upper technical compartment and a lower liquid compartment by means of a partition plate. However, this type of structure with a partition plate is fairly difficult to produce in a waste tank. Further, it is extremely difficult to make this kind of technical compartment tight. Hence humidity caused by the waste tank and aggressive gases, such as hydrogen sulphide, contained therein easily damage the equipment in the technical compartment. All in all, the use and servicing of the tank is rather complicated.

DE 19812520 discloses a solution in which a rack carrying the technical equipment is provided inside the tank. Also in this case humidity and aggressive gases prevailing in the waste tank cause problems for the functioning of the technical equipment.

FR 2812 628 A1 discloses a grease trap having an ogening fitted with a cover. The cover has a container with two compartments. This document is considered to be the prior art closest to the subject-matter of claim 1. DE 2026757 A1 discloses a biological effluent treatment plant comprising a tank divided by a concentric partition wall.

### BRIEF DISCLOSURE OF THE INVENTION

It is an object of the invention to provide a novel waste tank.

The waste tank of the invention is characterized in that the technical compartment is provided with a cover arranged in such a way it opens to the open air, without the waste compartment having to be opened at the same time.

In this solution the waste tank comprises a waste compartment for waste liquid and a technical compartment for technical equipment, separated in a liquid-proof manner from the waste compartment. However, at least part of the technical compartment is arranged inside the body of the tank. The technical compartment is further provided with a cover that is openable to the open air, without the waste compartment having to be opened at the same time. This solution is aesthetically advantageous, because the technical compartment is part of the waste tank. Further, the connecting and mounting works required for the purification unit are simple and easy to carry out. It is also easy to make the technical compartment tight and to ensure that during use and servicing humidity and aggressive corroding gases, such as hydrogen sulphide, prevailing in the waste tank cannot affect the technical equipment.

According to an embodiment the technical compartment is arranged in the upper part of the waste compartment so as to be detachable from it and to form the cover of the waste compartment. The technical compartment is therefore easy to lift from the waste compartment, which allows for simple and easy use and servicing of the tank. The technical compartment is divided into an electric equipment compartment and a chemical equipment compartment. Both of these compartments are provided with an openable cover that allows them to be opened separately, without the other compartment having to be opened. The electric equipment compartment is therefore extremely easy to seal and to maintain sealed in connection with usual service operations, such as the adding of chemicals.

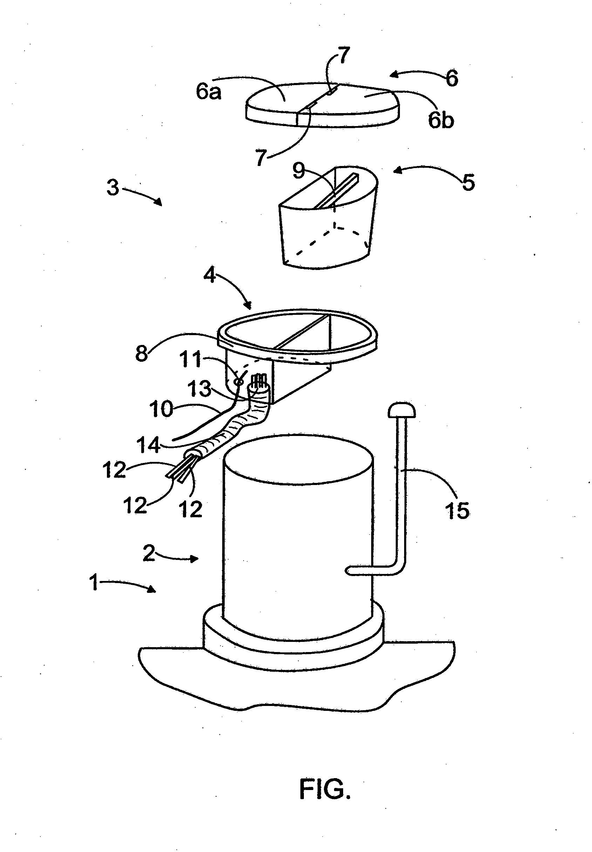

### BRIEF DISCLOSURE OF THE FIGURE

In the following the invention will be disclosed in greater detail with reference to the accompanying figure, which is a schematic view of a waste tank and a technical compartment arranged in connection therewith.

For the sake of clarity, some embodiments of the invention have been simplified in the figure. Like parts are indicated with like reference numerals.

### DETAILED DISCLOSURE OF SOME EMBODIMENTS OF THE INVENTION

The accompanying figure shows a waste tank 1 having a waste compartment for waste liquid. For the sake of clarity, the figure only shows the upper part of the waste tank structure.

The waste tank 1 further comprises a riser pipe 2. Hence, the riser pipe 2 and the waste compartment belong to the body of the waste tank 1. The riser pipe 2 may be detachable from the rest of the body for the duration of transport, for example, but even in such case, it is considered as part of the body of the waste tank 1.

The waste tank further comprises a technical compartment 3. For the sake of clarity, the technical compartment in the figure is slightly detached from the rest of the waste tank, although in normal circumstances at least part of the technical compartment 3 is arranged inside the body of the waste tank 1. The technical compartment 3 is arranged in the upper part of the riser pipe 2.

The technical compartment 3 comprises an electric equipment compartment 4 for electric equipment to be used in connection with the waste tank 1. Examples of such electric equipment include a compressor for producing compressed air and an electricity and control centre for the electricity supply and control of the pumps and the compressor.

In the solution shown in the accompanying figure the technical compartment 3 further comprises a separate chemical equipment compartment 5 for a chemical container or for other related utilities. In the solution shown in the figure the chemical compartment 5 is detachable from the electric equipment compartment 4 and may be lifted from it. It is also possible to provide a structure in which the electric equipment compartment 4 and the chemical equipment compartment 5 form an integral structure or even a single uniform compartment.

The technical compartment 3 is provided with a cover 6. The cover 6 in turn is provided with seals that render the technical compartment both liquid-proof and gas-tight. In the solution according to the figure the cover 6 is provided with hinges 7 so that the electrical equipment compartment 4 has a separate cover 6a and, correspondingly, the chemical equipment compartment 5 has a separate cover 6b. This allows the electrical equipment compartment 4 and the chemical equipment compartment 5 to be opened separately, without the other compartment having to be opened at the same time.

Further, the technical compartment 3 is provided with a flange 8 on which the technical compartment 3 rests against the upper edge of the riser pipe 2. The chemical equipment compartment 5 is provided with a handle 9. In other words, in the embodiment according to the figure the cover 6b of the chemical equipment compartment 5 may be opened and the chemical compartment 5 may be lifted up by the handle 9 without having to open the cover 6a of the electrical equipment compartment 4. With the chemical equipment compartment 5 lifted off, access is gained to service the waste compartment of the waste tank 1.

The accompanying figure also schematically illustrates an electric wire 10. One or more electric wires 10 may be provided, and they may be used for supplying to the technical compartment the operating voltage needed by the electric equipment housed therein and the related control and alarm data. The electric wires 10 are arranged into the technical compartment through an electric wire inlet seal 11.

Further, the figure schematically illustrates air hoses 12. Through the hoses 12 air produced by the air compressor is supplied into the waste tank 1 for different purposes of use, such as aeriation and discharge pumping of liquid. Further, one air hose 12 is used for supplying outdoor air to the air compressor. The air hoses 12 are drawn into the technical compartment 3 through an air pipe inlet seal 13. The air hoses 12 are arranged into a protecting tube 14. The air hose supplying outdoor air to the air compressor is preferably connected to an air inlet pipe 15 arranged to the side of the riser pipe 2, as illustrated in the figure.

The inlet seals 11 and 13 allow the technical compartment, the electric equipment compartment 4 in particular, to be kept both air- and gas-tight.

For the sake of clarity, the accompanying drawing does not show the air compressor or other electric equipment, neither the chemical containers nor the chemical pumps. However, for a skilled person the operation of these is obvious and therefore they are not discussed in greater detail in this context.

The technical compartment 3 is arranged to form the cover of the waste tank 1. The waste compartment underneath the technical compartment 3 is thus accessible when the technical compartment 3 is lifted from the upper edge of the riser pipe. Sufficiently long wires 10 and hoses 12 are provided to allow the cover formed by the technical compartment 3 to be lifted from the upper part of the riser pipe without having to disconnect the wires 10 and to detach the hoses 12. The waste tank 1 typically has two or more riser pipes 2, whereby the cover formed by the technical compartment 3 is only opened during less often occurring servicing, whereas when the tank 1 is emptied, the cover of one of the other riser pipes is opened.

Even if the tank 1 had only one riser pipe 2, the tank 1 would be easy to empty and to service, because the cover formed by the technical compartment 3 is simple and easy to lift from the upper part of the riser pipe 2.

In some cases the features disclosed in this application may be applied as such, independently of the other features. On the other hand, the features disclosed here may, if necessary, be combined to provide different combinations.

The drawing and the related specification are only meant to illustrate the inventive idea. The details of the invention may vary within the scope of the claims.

The cover 6 of the technical compartment 3 may also be uniform, in which case when the cover 6 is opened, the electric equipment compartment 4 and the chemical equipment compartment 5 are opened simultaneously, or a uniform technical compartment 3 housing substantially all the technical equipment is opened.

## Claims

1. A waste tank comprising a waste compartment for waste liquid and, separated from the waste compartment in a liquidproof manner, a technical compartment (3) for technical equipment, at least part of the technical compartment (3) being arranged inside the body of the waste tank (1), the technical compartment (3) being divided into an electric equipment compartment (4) for electric equipment and a chemical equipment compartment (5) for chemical equipment, the technical compartment (3) being provided with a cover (6), which is arranged to be opened to the open air, without the waste compartment having to be opened at the same time, **characterized in that**
the cover is provided with hinges such that the electric equipment compartment (4) and the chemical equipment compartment (5) are both provided with a separately openable cover (6a, 6b) so as to allow both compartments (4, 5) to be opened separately, without the other compartment (4, 5) having to be opened at the same time, the chemical equipment compartment (5) being detachable from the electric equipment compartment (4).

2. A waste tank according to claim 1, **characterized in that**
the technical compartment (3) is arranged in the upper part of the waste tank so as to be detachable from the waste tank (1) and to form the cover of the waste tank (1).

3. A waste tank according to any one of the preceding claims, **characterized in that**
at least part of the technical compartment (3) is arranged inside a riser pipe (2) of the waste tank (1).

## Patentansprüche

1. Abwassertank, umfassend eine Abwasserkammer für Abwasser und eine flüssigkeitsdicht von der Abwasserkammer getrennte technische Kammer (3) für technische Ausrüstung, wobei mindestens ein Teil der technischen Kammer (3) im Körper des Abwassertanks (1) angeordnet ist, wobei die technische Kammer (3) in eine Kammer (4) für elektrische Ausrüstung und eine Kammer (5) für chemische Ausrüstung unterteilt ist, wobei die technische Kammer (3) mit einer Abdeckung (6) versehen ist, die so angeordnet ist, dass sie ins Freie geöffnet werden kann, ohne dass gleichzeitig die Abwasserkammer geöffnet werden muss, **dadurch gekennzeichnet, dass** die Abdeckung mit Scharnieren versehen ist, so dass sowohl die Kammer (4) für elektrische Ausrüstung als auch die Kammer (5) für chemische Ausrüstung mit einer Abdeckung (6a, 6b) versehen sind, die getrennt geöffnet werden können, so dass beide Kammern (4, 5) getrennt geöffnet werden können, ohne dass die andere Kammer (4, 5) gleichzeitig geöffnet werden muss, wobei die Kammer (5) für chemische Ausrüstung von der Kammer (4) für elektrische Ausrüstung gelöst werden kann.

2. Abwassertank nach Anspruch 1, **dadurch gekennzeichnet, dass**
die technische Kammer (3) im oberen Teil des Abwassertanks angeordnet ist, so dass sie vom Abwassertank (1) gelöst werden und die Abdeckung des Abwassertanks (1) bilden kann.

3. Abwassertank nach einem der vorhergehenden Ansprüche, **dadurch gekennzeichnet, dass**
mindestens ein Teil der technischen Kammer (3) in einem Steigrohr (2) des Abwassertanks (1) angeordnet ist.

## Revendications

1. Réservoir à déchets comprenant un compartiment à déchets pour des déchets liquides et, séparé de façon étanche de celui-ci, un compartiment technique (3) pour un équipement technique, au moins une partie du compartiment technique (3) étant disposée à l'intérieur du corps du réservoir à déchets, le compartiment technique (3) étant divisé en un compartiment électrique (4) pour un équipement électrique et un compartiment à équipement chimique (5) pour un équipement chimique, le compartiment technique (3) étant pourvu d'un couvercle (6) qui est agencé de façon à être ouvert à l'air libre, sans qu'il soit nécessaire d'ouvrir le compartiment à déchets au même moment,
**caractérisé en ce que**
le couvercle est muni de charnières de façon que le compartiment à équipement électrique (4) et le compartiment à équipement chimique (5) sont tous deux équipés d'un couvercle s'ouvrant séparément (6a, 6b) de façon à permettre l'ouverture séparée des deux compartiments (6a, 6b) sans qu'il soit nécessaire d'ouvrir l'autre compartiment (4, 5) en même temps, le compartiment à équipement chimique (5) pouvant être détaché du compartiment à équipement électrique (4).

2. Réservoir à déchets suivant la revendication **1,caractérisé en ce que** le compartiment technique (3) est disposé dans la partie supérieure du réservoir à déchets de façon à pouvoir être détaché du réservoir à déchets (1) et former le couvercle de celui-ci.

3. Réservoir à déchets suivant une quelconque des revendications précédentes, **caractérisé en ce qu'**au moins une partie du compartiment technique (3) est disposée à l'intérieur d'un tuyau ascendant (2) du réservoir à déchets (1).
